# EUROPEAN PATENT APPLICATION

(11) **EP 4 535 497 A1**
(43) Date of publication of application: **09.04.2025**
(21) Application number: 23822805.0
(22) Date of filing: 26.04.2023
(51) Int. Cl.: H01M 10/0585, H01M 50/103

(54) **ELECTROCHEMICAL DEVICE AND ELECTRIC APPARATUS**

(30) Priority: 13.06.2022 CN 202210684872
(71) Applicant: Ningde Amperex Technology Limited, Ningde, Fujian 352100 (CN)
(72) Inventor: MING, Bangsheng, Ningde, Fujian 352100 (CN); CAO, Weiyi, Ningde, Fujian 352100 (CN); SUN, Guoyu, Ningde, Fujian 352100 (CN); WU, Hua, Ningde, Fujian 352100 (CN)
(74) Representative: Klunker IP Patentanwälte PartG mbB
(86) International application number: PCT/CN2023/090939
(87) International publication number: WO 2023/241234

(57) **Abstract**

This application relates to the technical field of electrochemistry, and discloses an electrochemical device and an electrical device. The electrochemical device includes a housing assembly and an electrode assembly accommodated in the housing. The housing assembly includes a housing and a cover. The housing includes a bottom wall and a sidewall. One end of the sidewall is connected to the bottom wall, and another end of the sidewall extends away from the bottom wall. The bottom wall and the sidewall jointly define an accommodation cavity. The cover is fitted onto an end of the sidewall and covers the accommodation cavity, the end being away from the bottom wall. A direction from the bottom wall to the cover is a first direction. The electrode assembly includes a first electrode plate, a second electrode plate, and a separator. The first electrode plate includes a first electrode plate unit. The second electrode plate includes a second electrode plate unit. The first electrode plate unit and the second electrode plate unit are stacked along a second direction and are both perpendicular to the second direction. The separator is disposed between the first electrode plate unit and the second electrode plate unit that are adjacent to each other. The second direction is perpendicular to the first direction. The electrochemical device can improve a current situation that a conventional electrochemical device is prone to deformation and cracking.

## Description

This application claims priority to Chinese Patent Application No. 202210684872.9, filed with the China National Intellectual Property Administration on June 13, 2022 and entitled "ELECTROCHEMICAL DEVICE AND ELECTRICAL DEVICE", which is incorporated herein by reference in its entirety.

### TECHNICAL FIELD

This application relates to the technical field of electrochemistry, and in particular, to an electrochemical device and an electrical device.

### BACKGROUND

An electrochemical device is a device that converts external energy into electrical energy for being stored internally so that the stored electrical energy can be supplied to an external electrical device (such as a portable electrical device, an electric vehicle, an electric tool, or an electric bicycle) when necessary.

Generally, an electrochemical device includes a housing assembly, an electrode assembly, and a tab or electrode post structure that leads the polarity of the electrode assembly out of the housing assembly. The housing assembly includes a housing and a cover. One end of the housing is opened to provide an accommodation cavity. The cover is fitted onto an open end of the accommodation cavity to cover the accommodation cavity. The electrode assembly is accommodated in the accommodation cavity, and includes a first electrode plate, a second electrode plate, and a separator that are stacked together. The first electrode plate and the second electrode plate are of opposite polarities, and are separated by a separator in between.

In an electrochemical device in which the electrode assembly assumes a stacked structure, a stacking direction of the first electrode plate and the second electrode plate is consistent with a direction from the housing to the cover. During charging of the electrochemical device, the electrode assembly swells noticeably along the stacking direction. In addition, the housing and the cover are not a one-piece structure, but are usually sealed by welding. The housing and the cover are thin and welded together on a small area of weld. Therefore, when an internal pressure of the housing increases, the weld is prone to become a fragile region, and the strength of the housing assembly in the stacking direction is relatively low. The expansion and deformation of the electrode assembly are prone to cause deformation or even cracking of the housing assembly in the stacking direction, and in turn, cause electrolyte leakage and other phenomena, thereby impairing the mounting performance of the electrochemical device.

### SUMMARY

An objective of this application is to provide an electrochemical device and an electrical device to improve a current situation that a housing assembly of the electrochemical device is prone to cracking.

To achieve the above objective, this application discloses the following technical solution.

An electrochemical device is disclosed, including a housing assembly and an electrode assembly. The housing assembly includes a housing and a cover. The housing includes a bottom wall and a sidewall. One end of the sidewall is connected to the bottom wall, and another end of the sidewall extends away from the bottom wall. The bottom wall and the sidewall jointly define an accommodation cavity. The cover is fitted onto an end of the sidewall and covers the accommodation cavity, the end being away from the bottom wall. A direction from the bottom wall to the cover is a first direction. An electrode assembly is accommodated in the accommodation cavity and includes a first electrode plate, a second electrode plate, and a separator. The first electrode plate includes a first electrode plate unit, and the second electrode plate includes a second electrode plate unit. The first electrode plate unit and the second electrode plate unit are stacked along a second direction and are both perpendicular to the second direction. The separator is disposed between the first electrode plate unit and the second electrode plate unit that are adjacent to each other. The second direction is perpendicular to the first direction.

In the electrochemical device provided in an embodiment of this application, the stacking direction of the first electrode plate units and the second electrode plate units is perpendicular to the first direction of the housing. Therefore, during charging of the electrochemical device, the expansion of the electrode assembly mainly occurs along the second direction. The amount of expansion in the first direction is tiny, and therefore, the housing is not prone to expand and deform in the first direction.

To sum up, the electrochemical device according to this embodiment of this application can improve the current situation that a conventional electrochemical device is prone to deformation and cracking. The electrode plates in the electrochemical device are stacked toward the second direction, and therefore, the battery cell scarcely swells in the first direction. An expansion force of the battery cell is mainly borne by the sidewall of the battery housing. Because the sidewall of the battery housing is usually formed in one piece, even if the sidewall is formed by welding, an overlap part existent at the weld of the sidewall leads to high strength of welding. Therefore, the strength of the sidewall in the second direction is relatively high, and the battery cell is not prone to deform because the expansion of the battery cell in the second direction is suppressed by the sidewall of the battery housing. The electrochemical device as a whole swells to just a low degree or to no degree. No space needs to be reserved in the housing to cushion the expansion between the electrode assembly and the housing along the above direction, thereby increasing the energy density of the electrochemical device. In other words, on the basis of increasing the energy density, the electrochemical device according to this embodiment of this application can improve the current situation of a conventional electrochemical device prone to expand and deform in the first direction.

In some embodiments, the sidewall is formed in one piece, and a tensile strength of a material of the sidewall is greater than or equal to 1000 MPa. Such a setting is intended to ensure that the sidewall is strong enough to resist deformation of the electrode assembly.

In some embodiments, the sidewall is formed by welding, and a welding strength at a weld is greater than or equal to 1000 MPa. The weld tends to be a fragile point vulnerable to deformation or fracture. Therefore, the tensile strength at the weld is controlled to be greater than or equal to 1000 MPa to ensure that the sidewall does not deform when subjected to the expansion of the electrode assembly.

In some embodiments, the first electrode plate is a negative electrode plate. The first electrode plate includes a first current collector and a first active material layer disposed on a surface of the first current collector. A material of the first active material layer includes silicon. A mass percent of silicon in a total mass of the first active material layer is greater than or equal to 10%. Compared with a carbon-based negative active material, the silicon-based negative active material exhibits advantages of a high gram capacity and a low potential. Therefore, such a setting increases the energy density of the electrochemical device. However, the expansion rate of the silicon negative active material is relatively high during cycling of the battery cell. After being fully lithiated, silicon expands by approximately 300% in volume. The packaging bag of a conventional pouch-type cell can hardly withstand the expansion of the battery cell that contains a silicon negative electrode. Therefore, the battery cell with a silicon negative electrode is usually packaged in a hard shell such as a steel shell. However, a conventional steel-shell stacked-type battery stacks the electrode plates along a thickness direction of the housing. Due to the problem of expansion of a high-silicon system, the problem of bursting the shell open at the weld between the upper part and the lower part of the housing is still prone to occur due to deformation. In practical operations, in order to prevent expansion of the stacked-type battery that contains a silicon negative electrode, a space needs to be reserved in the thickness direction to cushion an approximately 10% expansion rate, thereby greatly impairing the energy density of the battery. The stacking method described in this application is especially suitable for a stacked-type battery cell that contains a silicon negative electrode, and can eliminate the need to reserve an expansion space, increase the energy density, and suppress the battery expansion.

In some embodiments, the mass percent of silicon in the total mass of the first active material layer is preferably greater than or equal to 30% and less than or equal to 80%. Due to the high gram capacity and the high expansion rate of the silicon-based negative active material, if the mass percent of silicon in the first active material layer is less than 30%, the effect of the material is limited in increasing the energy density of the electrochemical device. If the mass percent of silicon in the first active material layer is greater than 80%, the silicon can maximally increase the energy density of the electrochemical device, but may lead to a very high expansion rate of the negative electrode plate. Suppressed by the high-rigidity sidewall, the expansion force of the negative electrode plate is transformed into an extrusion force between the electrode plates of the electrode assembly. In this way, each electrode plate is subjected to cyclic extrusion forces during repeated charge-and-discharge cycles of the electrochemical device. This may cause the active material to fall off and result in defects such as lithium plating, thereby impairing the cycle life of the electrochemical device to some extent.

In some embodiments, the first active material layer includes at least one of the following materials: silicon, silicon-based oxide, silicon carbide, silicon nanowires, and silicon nanoparticles.

In some embodiments, the electrochemical device further includes a first conductive piece. The first electrode plate includes a first current collector and a first active material layer. The first current collector includes a first region and a second region. The first region is perpendicular to the second direction. The second region is electrically connected to the first region. The first active material layer is disposed on a surface of the first region. The first region and the first active material layer jointly constitute the first electrode plate unit. All the first electrode plate units are spaced out along the second direction. The second region is electrically connected to the first conductive piece.

In some embodiments, the housing includes a first sidewall unit and a second sidewall unit disposed opposite to each other along a third direction. Both the second region and the first conductive piece are located between the first region and the first sidewall unit. The third direction is perpendicular to both the first direction and the second direction. The second region includes a first part and a second part. One end of the first part is connected to the first region, and another end of the first part extends toward the first sidewall unit. The second part is connected to an end of the first part, the end being away from the first region. The second part is bent against the first part; and the second part is connected to the first conductive piece.

In some embodiments, the electrode assembly includes at least three first electrode plates. The second part is bent against the first part, and all the second parts are bent in a same bending direction. Among any two adjacent second parts along a first preset direction, a downstream second part at least partly overlaps an upstream second part, and no three adjacent second parts share a common overlap region. That is, the second parts are lap-jointed successively. The first preset direction is a direction from one end to another end of the second part, where the one end is close to the first part and the other end is away from the first part.

In other embodiments, the second parts may be stacked successively along the third direction, but this arrangement requires a relatively large space reserved between the first region and the first sidewall unit. In contrast, in this embodiment, all the second parts are lap-jointed successively to overcome such a disadvantage.

In some embodiments, the electrochemical device further includes a first insulating tape. The electrode assembly includes a first surface and a second surface that are opposite to each other along the second direction. One end of the first insulating tape is fixed onto the first surface, and another end of the first insulating tape is fixed onto the second surface. The first insulating tape is in a tensioned state.

In this way, the first insulating tape clamps the electrode assembly between two ends of the tape, thereby reducing the risk of slackness and deformation between the first electrode plate unit, the second electrode plate, and the separator.

In some embodiments, the electrochemical device further includes a second insulating tape. The second insulating tape is fixed onto the electrode assembly and the housing separately so that the electrode assembly is fixed onto the housing.

In some embodiments, the electrochemical device includes at least two electrode assemblies, and all the electrode assemblies are arranged along the second direction.

With a plurality of electrode assemblies stacked together in the electrochemical device, a single electrode assembly can avoid being overly thick, thereby facilitating the process of stacking each electrode assembly and reducing the error rate during the stacking of the electrode assemblies.

In some embodiments, the electrochemical device further includes an electrode post mounted on the housing. The electrode post is insulated from the housing, and the electrode post is electrically connected to the second electrode plate unit.

In this way, the electrode post constitutes a conductive terminal of the electrochemical device, thereby leading out the polarity of the second electrode plate.

In some embodiments, the housing includes a pressure relief portion. The pressure relief portion is configured to communicate atmosphere between the accommodation cavity and the outside of the housing when the temperature of the electrochemical device is higher than a preset threshold.

A gas pressure in the housing increases due to the gas generated when the temperature of the electrochemical device is overly high, thereby possibly causing explosion of the electrochemical device and posing high safety hazards. The pressure relief portion can communicate atmosphere between the accommodation cavity and the outside of the housing when the temperature of the electrochemical device is higher than the preset threshold, thereby expelling the gas out of the accommodation cavity to eliminate the hazards.

In some embodiments, an injection port is created on the bottom wall or the cover. In this way, during injection of an electrolytic solution into the accommodation cavity, the electrolytic solution permeates into the gap between the first electrode plate unit, the separator, and the second electrode plate unit from the beginning, thereby increasing the rate of infiltrating the electrode assembly, and shortening the manufacturing cycle time of the electrochemical device to some extent.

In some embodiments, the injection port is created on the cover, and a distance between the injection port and a geometric centroid of the cover is less than 5 mm; or the injection port is created on the bottom wall, and a distance between the injection port and a geometric centroid of the bottom wall is less than 5 mm. In this way, the rate at which the electrolytic solution infiltrates the electrode assembly is increased.

In some embodiments, viewed along the first direction, an edge of the bottom wall does not go beyond an end of the connecting wall portion, the end being close to the first wall portion. Viewed along the first direction, an edge of the cover does not go beyond an end of the connecting wall portion, the end being close to the second wall portion. In this way, on the basis that the housing provides an accommodation cavity that is enough in volume, the overall volume of the electrochemical device can be minimized, or a space occupied by the electrochemical device fitted into an electrical device can be minimized.

In some embodiments, a length-to-width ratio of the first electrode plate and a length-to-width ratio of the second electrode plate are both 3 to 20. When other conditions are the same, the impedance of the electrode plate is substantially affected by its length. If the length-to-width ratio of the electrode plate is overly high, that is, if the length of the electrode plate is overly large in relation to width, then the high length-to-width ratio leads to a high impedance of a single electrode plate, and in turn, the internal resistance of the battery is high, and the low-impedance advantage of a multi-tab stacked-type battery cannot be fully utilized. If the length-to-width ratio of the electrode plate is overly low, that is, if the length of the electrode plate is overly small in relation to width, then the end of the tab in the length direction occupies a relatively high proportion of space in relation to the overall length, thereby reducing the effect of this technical solution in improving the volume utilization rate.

To achieve the above objective, this application further discloses the following technical solution:

An electrical device is disclosed, including the electrochemical device described above. The electrical device contains the electrochemical device described in the above embodiment, and therefore, can improve the current situation that the electrochemical device in the electrical device is prone to expansion and deformation in the first direction.

### BRIEF DESCRIPTION OF DRAWINGS

To describe the technical solutions in some embodiments of this application more clearly, the following outlines the drawings to be used in the description of some embodiments. Evidently, the drawings outlined below are merely a part of embodiments of this application. A person of ordinary skill in the art may derive other drawings from the illustrated structure without making any creative effort.
FIG. 1 is a three-dimensional schematic diagram of an electrochemical device according to an embodiment of this application;
FIG. 2 is a schematic exploded view of the electrochemical device shown in FIG. 1;
FIG. 3 is a schematic sectional view of an electrode assembly shown in FIG. 2 and sectioned along an A-A line;
FIG. 4 is a front view of a first electrode plate shown in FIG. 2;
FIG. 5 is a bottom view of FIG. 4;
FIG. 6 is a front view of a second electrode plate shown in FIG. 2;
FIG. 7 is top view of FIG. 6; and
FIG. 8 is a schematic diagram of an electrical device according to an embodiment of this application.

### List of reference numerals:

1. electrochemical device;
100. housing assembly; 110. housing; 120. cover; 130. pressure relief portion; 111. bottom wall; 112. sidewall; 1121. first sidewall unit; 1122. second sidewall unit; 1123. third sidewall unit; 1124. fourth sidewall unit; 101. accommodation cavity; 102. injection port;
200. electrode assembly; 210. first electrode plate; 220. second electrode plate; 230. separator; 240. first insulating tape; 250. second insulating tape; 211. first electrode plate unit; 212. first current collector; 213. first active material layer; 2121. first region; 2122. second region; 2123. first part; 2124. second part; 221. second electrode plate unit; 222. second current collector; 223. second active material layer; 2221. third region; 2222. fourth region; 2223. third part; 2224. fourth part; 201. first surface; 202. second surface;
300. first conductive piece;
400. second conductive piece;
500. electrode post;
Z. first direction;
X. second direction;
Y. third direction;
M: first preset direction;
N. second preset direction;
1b. electrochemical device; 200b. electrode assembly; 210b. first electrode plate; 220b. second electrode plate; 211b. first electrode plate unit; 214b. first connection unit; 2101b. first side; 221b. second electrode plate unit; 224b. second connection unit; 2201b. second side.
2. electrical device.

### DETAILED DESCRIPTION

For ease of understanding this application, the following describes this application in more detail with reference to drawings and specific embodiments. It is hereby noted that an element referred to herein as being "fixed to" or "fastened to" another element may be directly disposed on the other element, or may be fixed or fastened to the other element with one or more elements in between. An element referred to herein as "connected to" another element may be connected to the other element directly or with one or more elements in between. The terms "vertical", "horizontal", "left", "right", "in", "out" and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

In this specification, the meanings of "mounting" or "installation" include fixing or confining an element or unit to a specific position or place by welding/soldering, screwing, snap-fit connection, bonding, or other means, where the element or unit may be held stationary in the specific position or place or may move within a limited range, and the element or unit may be detachable or undetachable after being fixed or confined to the specific position or place, without being limited in embodiments of this application.

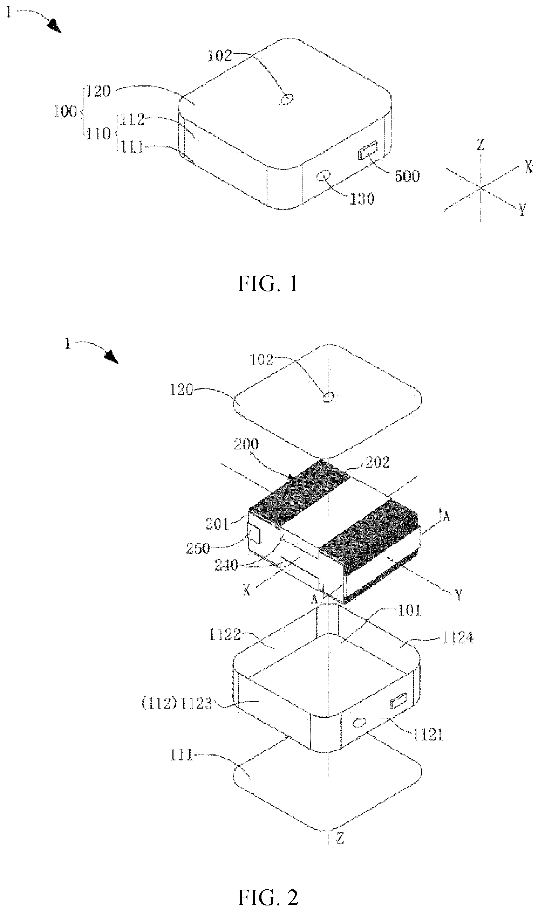

FIG. 1 to FIG. 3 are a three-dimensional schematic diagram of an electrochemical device 1 according to an embodiment of this application, a schematic exploded view of the electrochemical device, and a schematic sectional view of an electrode assembly shown in FIG. 2 and sectioned along an A-A line, respectively. The electrochemical device 1 includes a housing assembly 100 and an electrode assembly 200. The housing assembly 100 includes a housing 110 and a cover 120. The housing 110 includes a bottom wall 111 and a sidewall 112. One end of the sidewall 112 is connected to the bottom wall 111, and another end of the sidewall extends away from the bottom wall 111. The bottom wall and the sidewall jointly define an accommodation cavity 101. The cover 120 is fitted onto an end of the sidewall 112 and covers the accommodation cavity 101, the end being away from the bottom wall 111. A direction from the bottom wall 111 to the cover 120 is a first direction Z. The electrode assembly 200 is accommodated in the accommodation cavity 101, and includes a first electrode plate 210, a second electrode plate 220, and a separator 230. The first electrode plate 210 includes a first electrode plate unit 211. The second electrode plate 220 includes a second electrode plate unit 221. The first electrode plate unit 211 and the second electrode plate unit 221 are stacked along a shown second direction X and are both perpendicular to the second direction X. The separator 230 is disposed between the first electrode plate unit 211 and the second electrode plate unit 221 that are adjacent to each other.

It is hereby noted that the "first direction" mentioned herein means a direction from the housing 110 to the cover 120, that is, a packaging direction of the housing and cover. In this embodiment, the first direction is a thickness direction of the electrochemical device 1. The "second direction" mentioned herein means a direction perpendicular to the first direction Z. In this embodiment, the second direction X is a width direction of the electrochemical device 1. Understandably, in other embodiments of this application, the second direction X may be a length direction of the electrochemical device 1 instead. In addition, for ease of description and understanding, a direction perpendicular to both the first direction Z and the second direction X is defined as a third direction Y. Next, using an example in which the electrochemical device 1 is a lithium-ion hard-shell battery, the housing assembly 100 and the electrode assembly 200 are described in detail below. Understandably, in other embodiments of this application, the electrochemical device 1 may be a pouch-type battery, a sodium-ion battery, or another form of battery instead.

Referring to FIG. 1 and FIG. 2 specifically, the housing assembly 100 is a container and mounting base for other components in the electrochemical device 1. The housing assembly 100 includes a housing 110 and a cover 120. The housing 110 assumes a box-shaped structure, and includes a bottom wall 111 and a sidewall 112. The bottom wall 111 assumes a flat plate-shaped structure. The sidewall 112 is roughly in the shape of a ring structure with a closed cross-section. One end of the sidewall is connected to the bottom wall 111, and another end of the sidewall extends away from the bottom wall 111. The bottom wall 111 and the sidewall 112 jointly define the accommodation cavity 101 for accommodating the electrode assembly 200 and an electrolytic solution. Optionally, the sidewall 112 is roughly rectangular or rounded-rectangular when viewed along the first direction Z. The sidewall 112 includes a first sidewall unit 1121 and a second sidewall unit 1122 that are disposed opposite to each other along the third direction Y, and a third sidewall unit 1123 and a fourth sidewall unit 1124 that are disposed opposite to each other along the second direction X. The cover 120 also assumes a flat plate-shaped structure. The cover and the bottom wall 111 are disposed opposite to each other along the first direction Z. The cover 120 is fitted onto an end of the sidewall 112 and covers the accommodation cavity 101, the end being away from the bottom wall 111.

In this embodiment, the bottom wall 111 may be formed independently of the one-piece sidewall 112. The bottom wall 111 is fixed onto the sidewall 112 by welding, such as laser welding, and covers one end of the sidewall 112, the end being oriented toward the bottom wall 111. The cover 120 is fixed onto the one-piece sidewall 112 by welding, such as laser welding, and covers one end of the sidewall 112, the end being oriented toward the cover 120. Preferably, viewed along the first direction X, an edge of the bottom wall 111 does not go beyond an end of the sidewall 112, the end being close to the bottom wall 111; and an edge of the cover 120 does not go beyond an end of the sidewall 112, the end being close to the cover 120. In this way, on the basis that the housing assembly 100 provides an accommodation cavity 101 that is enough in volume, the overall volume of the electrochemical device 1 is minimized, or a space occupied by the electrochemical device 1 fitted into an electrical device is minimized. Alternatively, in other embodiments of this application, the edge of the bottom wall 111 alone or the cover 120 alone does not go beyond the edge of the sidewall 112. In addition, it is hereby noted that, in other embodiments, the bottom wall 111 and the sidewall 112 may be integrally formed by a conventional method such as one-piece stamping.

The gas pressure in the housing assembly 100 increases due to gas generated when the temperature of the electrochemical device 1 is overly high or when another side reaction occurs, thereby possibly causing explosion of the electrochemical device 1 and posing high safety hazards. To reduce such hazards, a pressure relief portion 130 is disposed on the housing assembly 100 of the electrochemical device 1 in this embodiment. The pressure relief portion 130 is configured to communicate atmosphere between the accommodation cavity 101 and the outside of the housing assembly 100 when a gas pressure in the electrochemical device 1 is higher than a preset threshold, thereby expelling the gas out of the accommodation cavity 101 to eliminate the hazards. The term "preset threshold" mentioned herein is a pressure value inside the electrochemical device 1 when the pressure relief portion 130 is switched to such a state that the atmosphere is just communicated between the accommodation cavity 101 and the outside of the housing assembly 100. The preset threshold is a pressure value higher than a normal-state gas pressure inside the electrochemical device 1 and lower than an internal gas pressure value that actuates explosion of the electrochemical device 1 without a pressure relief portion. The structure of the pressure relief portion 130 is diversified. For example, in some embodiments, the pressure relief portion 130 is a region more fragile than other parts on the housing assembly 100. Specifically, the pressure relief portion 130 may be a region thinner than other parts. When the gas pressure in the accommodation cavity 101 increases to a value higher than the preset threshold, the gas pressure will burst the pressure relief portion 130 first to release the pressure. For example, in some other embodiments, the pressure relief portion 130 is a tiny valve element. Specifically, the housing assembly 100 includes a pressure relief through-hole, and the pressure relief portion 130 is disposed at the pressure relief hole. When the gas pressure in the accommodation cavity 101 is lower than the preset threshold, the pressure relief portion 130 covers the pressure relief hole. When the gas pressure in the accommodation cavity 101 is higher than the preset threshold, the pressure relief portion 130 opens up the pressure relief hole to release the pressure.

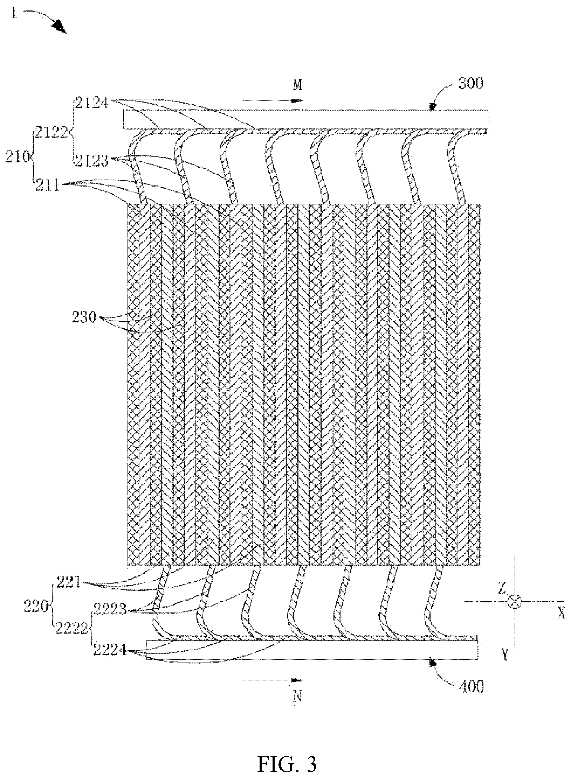

For the electrode assembly 200, referring to FIG. 3 first, and then referring to FIG. 1 and FIG. 2 together, the electrode assembly 200 is a core component in the electrochemical device 1. The electrochemical device 1 implements charging and discharging through the electrode assembly. Specifically, the electrode assembly 200 includes a first electrode plate 210, a second electrode plate 220, and a separator 230. The first electrode plate 210, the second electrode plate 220, and the separator 230 are stacked successively along a second direction X shown in the drawing. The first electrode plate 210 and the second electrode plate 220 are of opposite polarities. The separator 230 is disposed between the first electrode plate 210 and the second electrode plate 220 that are adjacent to each other. In this embodiment, the electrode assembly 200 includes a plurality of first electrode plates 210, a plurality of second electrode plates 220, and a plurality of separators 230. The first electrode plates 210 alternate with the second electrode plates 220 along the second direction X. The separator 230 is disposed between a first electrode plate 210 and a second electrode plate 220 that are adjacent to each other. The term "plurality of" mentioned herein means at least two in number.

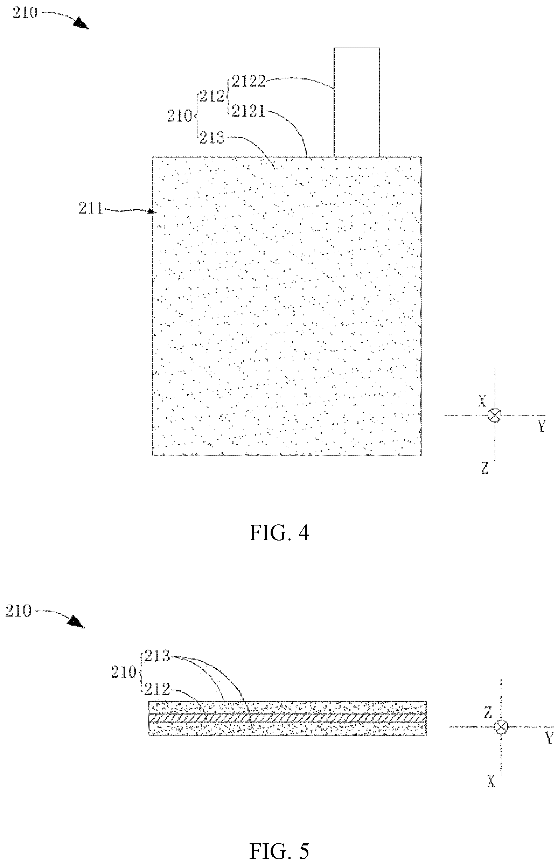

Specifically, referring to FIG. 4 to FIG. 7, which show a front view and a bottom view of the first electrode plate 210 as well as a front view and top view of the second electrode plate 220 respectively, and also referring to other drawings together, the first electrode plate 210 includes a first electrode plate unit 211. The first electrode plate unit 211 is a main body of the first electrode plate 210. The second electrode plate 220 includes a second electrode plate unit 221. The second electrode plate unit 221 is a main body of the second electrode plate 220. The first electrode plate unit 211 and the second electrode plate unit 221 are of opposite polarities. The first electrode plate unit 211 of each first electrode plate 210 and the second electrode plate unit 221 of each second electrode plate 220 are stacked along the second direction X. The separator 230 is disposed between the first electrode plate unit 211 and the second electrode plate unit 221 that are adjacent to each other, to serve a separation function.

Next, the structures of the first electrode plate 210 and the second electrode plate 220 are described below using an example in which the first electrode plate 210 is a negative electrode plate and the second electrode plate 220 is a positive electrode plate. Specifically, referring to FIG. 4 and FIG. 5, the first electrode plate 210 includes a first current collector 212 and a first active material layer 213. The first current collector 212 assumes a sheet structure, and includes a first region 2121 and a second region 2122. The first region 2121 is rectangular as a whole, and is disposed perpendicular to the second direction X. The second region 2122 is strip-shaped, and is electrically connected to the first region 2121. In this embodiment, the second region 2122 is formed in one piece together with the first region 2121, and is formed by extending outward from the edge of the first region 2121. Alternatively, in other embodiments of this application, the second region 2122 may be formed independently of the first region 2121 and electrically connected to the first region 2121 by welding or bonding. The first current collector 212 is a substrate that supports the first active material layer 213, and is also a carrier for the first electrode plate 210 to transfer electrons. In some embodiments, the first current collector 212 is a copper foil. In other embodiments of this application, the first current collector 212 may be another suitable foil material such as a nickel foil instead. The first active material layer 213 is disposed on the surface of the first region 2121, and combines with the first region 2121 to form the first electrode plate unit 211. In this embodiment, the first active material layer 213 is a silicon-based negative active material. For example, the first active material includes one or more of silicon, silicon-based oxide, silicon carbide, silicon nanowires, or silicon nanoparticles. Alternatively, in other embodiments of this application, the first active material may include other types of silicon-based materials, as long as the first active material includes silicon. Compared with a carbon-based negative active material, the silicon-based negative active material exhibits advantages of a high gram capacity and a low potential. Therefore, such a setting increases the energy density of the electrochemical device 1. Preferably, the mass percent of silicon in the first active material layer 213 based on the total mass of the first active material layer 213 is greater than or equal to 10%. More preferably, the mass percent of silicon in the first active material layer 213 based on the total mass of the first active material layer 213 falls within a range of 30% to 80%. Because the expansion rate of the silicon-based negative electrode material is relatively high during charging of the electrochemical device 1, such setting is intended to ensure a relatively high energy density of the electrochemical device 1 and avoid excessive expansion of the electrode assembly 200 during charging. In the electrode assembly 200, the first elongation rate units 211 are spaced out along the second direction X. The second regions 2122 extend beyond the separator 230 and are electrically connected, so that the first electrode plates 210 are electrically connected to each other.

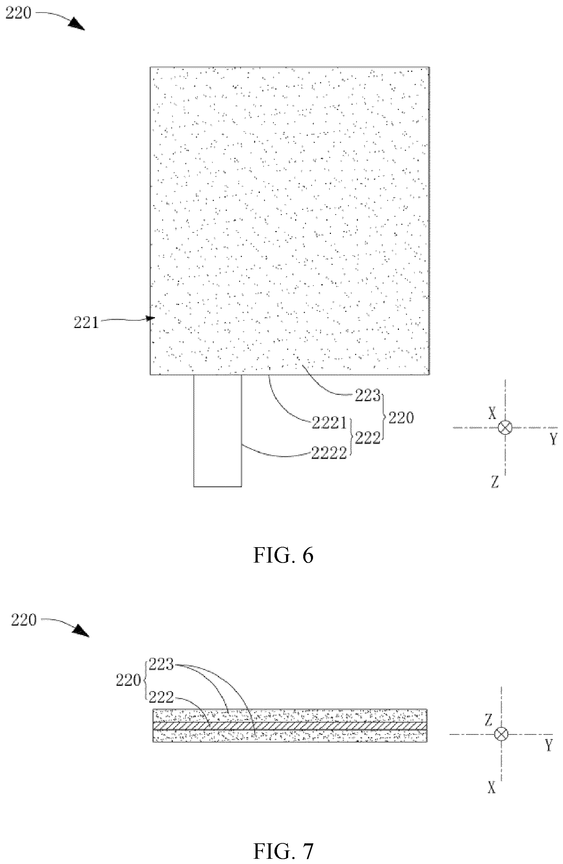

Specifically, referring to FIG. 6 and FIG. 7, the second electrode plate 220 includes a second current collector 222 and a second active material layer 223. The second current collector 222 assumes a sheet structure, and includes a third region 2221 and a fourth region 2222. The third region 2221 is rectangular as a whole, and is disposed perpendicular to the second direction X. The fourth region 2222 is strip-shaped, and is electrically connected to the third region 2221. In this embodiment, the fourth region 2222 is formed in one piece together with the third region 2221, and is formed by extending outward from the edge of the third region 2221. Alternatively, in other embodiments of this application, the fourth region 2222 may be formed independently of the third region 2221 and electrically connected to the third region 2221 by welding or bonding. The second current collector 222 is a substrate that supports the second active material layer 223, and is also a carrier for the second electrode plate 220 to transfer electrons. In some embodiments, the second current collector 222 is an aluminum foil. In other embodiments of this application, the second current collector 222 may be another suitable foil material such as a nickel foil instead. The second active material layer 223 is a carrier for intercalating or deintercalating lithium ions. The second active material layer 223 is disposed on the surface of the third region 2221, and combines with the third region 2221 to form the second electrode plate unit 221. In the electrode assembly 200, the second electrode plate units 221 are spaced out along the second direction X, and alternate with the first electrode plate units 211. The fourth regions 2222 extend beyond the separator 230 and are electrically connected, so that the second electrode plates 220 are electrically connected to each other. In this embodiment, the second active material layer 223 is a positive active material that includes a lithium compound.

The separator 230 is disposed between the first electrode plate unit 211 and the second electrode plate unit 221 that are adjacent to each other, and serves mainly to isolate the first electrode plate 210 from the second electrode plate 220 and conduct ions. The material of the separator is not limited. In some embodiments, the separator 230 includes a porous substrate. In some embodiments, the separator 230 further includes a functional coating applied onto the porous substrate. The functional coating may include at least one of a binder or inorganic particles. In some embodiments, the porous substrate is a polymer film, a multilayer polymer film, or a non-woven fabric, which, in each case, is formed by any one of the following polymers or by a composite of at least two of the following polymers: polyethylene, polypropylene, polyethylene terephthalate, polybutylene terephthalate, polyphthalamide, polyester, polyacetal, polyamide, polycarbonate, polyimide, polyether ether ketone, polyaryl ether ketone, polyetherimide, polyamideimide, polybenzimidazole, polyethersulfone, polyphenylene ether, cycloolefin copolymer, polyphenylene sulfide, and polyethylene naphthalene. Such polymers assume relatively high thermal stability, facilitate surface treatment, and in turn, are easy to be coated. In addition, such polymers are highly flexible and bendable. In some embodiments, the binder includes at least one of the following polymers: poly(vinylidene fluoride-co-hexafluoropropylene), poly(vinylidene fluoride-co-trichloroethylene), polyacrylate, polyacrylic acid, polyacrylic acid sodium salt, polyacrylonitrile, polyvinylpyrrolidone, polyvinyl acetate, poly(ethylene-co-vinyl acetate), polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, sodium carboxymethyl cellulose, lithium carboxymethyl cellulose, poly(acrylonitrile-co-styrene butadiene), polyvinyl alcohol, polyvinyl ether, polytetrafluoroethylene, polyhexafluoropropylene, poly(styrene-co-butadiene), and polyvinylidene difluoride. Such polymers exert a strong bonding effect to bond inorganic particles together, or bond the separator 230 and the first electrode plate 210/the second electrode plate 220 together to form one piece, thereby increasing the hardness of the electrode assembly 200. In other embodiments, the binder may further include other polymers. In some embodiments, the inorganic particles include at least one of the following inorganic particles: silicon dioxide, aluminum oxide, titanium oxide, zinc oxide, magnesium oxide, hafnium dioxide, tin oxide, zirconium oxide, yttrium oxide, silicon carbide, boehmite, magnesium hydroxide, aluminum hydroxide, calcium titanate, barium titanate, lithium phosphate, lithium titanium phosphate, and lithium lanthanum titanate. Such inorganic particles assume high thermal stability, and improve the high-temperature resistance performance of the electrochemical device 1.

In some embodiments, in order to keep the first electrode plate unit 211, the second electrode plate unit 221, and the separator 230 in a relatively stable stacked state against slackness before being loaded into the housing assembly 100, the electrochemical device 1 further includes a first insulating tape 240. Specifically, referring to FIG. 2, the electrode assembly 200 includes a first surface 201 and a second surface 202 that are opposite to each other along the second direction X. The first insulating tape 240 is in a tensioned state. One end of the first insulating tape is fixed onto the first surface 201, and another end of the first insulating tape extends to the second surface 202 along the second direction X and is fixed onto the second surface 202. In this way, the first insulating tape 240 clamps the electrode assembly 200 between two ends of the tape, thereby reducing the risk of slackness and deformation between the first electrode plate unit 211, the second electrode plate 220, and the separator 230. Optionally, the electrode assembly 200 is connected to two first insulating tapes 240. The two first insulating tapes 240 are disposed opposite to each other along the first direction Z. One of the first insulating tapes 240 is located between the electrode assembly 200 and the bottom wall 111, and the other first insulating tape 240 is located between the electrode assembly 200 and the cover 120.

In some embodiments, in order to fix the electrode assembly 200 onto the inner wall of the housing assembly 100, the electrochemical device 1 further includes a second insulating tape 250. The second insulating tape 250 is fixed onto the electrode assembly 200 and the housing assembly 100 separately, so that the electrode assembly 200 is fixed onto the housing assembly 100. Specifically, still referring to FIG. 2, the second insulating tape 250 is strip-shaped, and is located between the electrode assembly 200 and the sidewall 112. One end of the second insulating tape 250 is fixed onto the first surface 201, and another end of the second insulating tape extends to the second surface 202 along the second direction X and is fixed onto the second surface 202. The second insulating tape 250 is a double-sided tape. One side of the second insulating tape is bonded to the electrode assembly 200, and the other side of the second insulating tape is bonded to the sidewall 112, so that the electrode assembly 200 is fixed to the housing assembly 100. Understandably, the second insulating tape 250 is intended to fix the electrode assembly 200 to the housing assembly 100. Therefore, in other embodiments of this application, the second insulating tape 250 may be another type of insulating tape such as hot-melt adhesive and single-sided tape instead. The type of the insulating tape is not particularly limited in this application. In addition, in other embodiments, the second insulating tape may be located just between any surface of the electrode assembly and any surface of the housing assembly, as long as the second insulating tape can serve the function of fixing the electrode assembly to the housing assembly.

In this embodiment, the housing assembly 100 may be conductive. The electrochemical device 1 further includes a first conductive piece 300. The second regions 2122 are electrically connected to each other by the first conductive piece 300. The first conductive piece 300 is electrically connected to the housing assembly 100, so that the housing assembly 100 constitutes a conductive terminal of the electrochemical device 1. Specifically, referring to FIG. 3, and referring to FIG. 2 together, the second region 2122 is located between the first region 2121 and the first sidewall unit 1121 and is bent, and includes a first part 2123 and a second part 2124. One end of the first part 2123 is connected to the first region 2121, and another end of the first part extends toward the first sidewall unit 1121. The second part 2124 is connected to an end of the first part 2123 and bent against the first part 2123, the end being away from the first region 2121. All the second parts are bent in the same direction. The first conductive piece 300 is sheet- or strip-shaped, and is disposed between the electrode assembly 200 and the first sidewall unit 1121. The second part 2124 is electrically connected to the first conductive piece 300. In this embodiment, the second regions 2122 are lap-jointed successively. Specifically, the electrode assembly 200 includes at least three first electrode plate 210. Among any two adjacent second parts 2124 along a first preset direction M shown in FIG. 3, a downstream second part 2124 at least partly overlaps an upstream second part 2124, and no three adjacent second parts share a common overlap region. Among an upstream second part, a middle second part, and downstream second part that are adjacent successively, a region of the upstream second part 2124 is covered by the middle second part 2124 but not covered by the downstream second part 2124. In other words, the three adjacent second parts 2124 do not share a common overlap region. The first preset direction M is a direction from one end to another end of the second part 2124, where the one end is close to the first part 2123, and the other end is away from the first part 2123. In this embodiment, the first preset direction M is parallel to the second direction X. In another embodiment of this application, the first preset direction M may be at an angle to the second direction X instead. It is hereby noted that, in another embodiment of this application, the second parts 2124 may be stacked successively along a third direction Y, but this arrangement requires a relatively large space reserved between the first region 2121 and the first sidewall unit 1121. In contrast, in this embodiment, all the second parts 2124 are lap-jointed successively to overcome such a disadvantage.

Further, the electrochemical device 1 includes a second conductive piece 400 and an electrode post 500. The fourth regions 2222 are electrically connected by the second conductive piece 400. The second conductive piece is connected to the electrode post 500. One end of the electrode post 500 is located in the accommodation cavity 101 to get connected to the second conductive piece 400, that is, to get electrically connected to the fourth region 2222. Another end of the electrode post protrudes from the housing assembly 100, so that the electrode post 500 constitutes another conductive terminal of the electrochemical device 1. Still referring to FIG. 3, and also referring to FIG. 2 together, the fourth region 2222 is located between the third region 2221 and the second sidewall unit 1122 and is bent, and includes a third part 2223 and a fourth part 2224. One end of the third part 2223 is connected to the third region 2221, and another end of the third part extends toward the second sidewall unit 1122. The fourth part 2224 is connected to an end of the third part 2223 and bent against the third part 2223, the end being away from the third region 2221. All the fourth parts 2224 are bent in the same direction. The second conductive piece 400 is sheet-shaped, and is disposed between the electrode assembly 200 and the second sidewall unit 1122. The fourth part 2224 overlaps the first conductive piece 300, so that all the fourth regions 2222 are electrically connected by the first conductive piece 300. In this embodiment, the fourth regions 2222 are lap-jointed successively. Specifically, among any two adjacent fourth parts 2224 along a second preset direction N shown in FIG. 3, a downstream fourth part 2224 at least partly overlaps an upstream fourth part 2224, and no three adjacent fourth parts 2224 share a common overlap region. Among an upstream fourth part, a middle fourth part, and downstream fourth part that are adjacent successively, a region of the upstream fourth part is covered by the middle fourth part 2224 but not covered by the downstream fourth part. In other words, the three adjacent fourth parts 2224 do not share a common overlap region. The second preset direction N is a direction from one end to another end of the fourth part 2224, where the one end is close to the third part 2223, and the other end is away from the third part 2223. In this embodiment, the second preset direction N is identical to the first preset direction M. In another embodiment of this application, the second preset direction N may be opposite to the first preset direction M or may be at an angle to the second direction Y.

Understandably, although the second region 2122 and the fourth region 2222 are disposed on two different sides of the first region 2121 respectively in this embodiment as an example, this application is not limited to the example. In another embodiment of this application, the second region 2122 and the fourth region 2222 may be located on the same side of the first region 2121 instead. Correspondingly, the widths of the second region 2122 and the fourth region 2222 are both less than a half of the width of the first region 2121.

In some embodiments, an injection port 102 that communicates with the accommodation cavity 101 is created on the outer surface of the housing assembly 100. The injection port 102 is available for leading the electrolytic solution into the accommodation cavity. Correspondingly, the electrochemical device 1 further includes an injection plug (not shown in the drawing). The injection plug is fitted in the injection port and covers the injection port. Optionally, the injection port 102 is created on the cover 120. In this way, during injection of an electrolytic solution into the accommodation cavity 101, the electrolytic solution permeates into the gap between the first electrode plate unit 211, the separator 230, and the second electrode plate unit 221 from the beginning, thereby increasing the rate of infiltrating the electrode assembly 200, and shortening the manufacturing cycle time of the electrochemical device 1 to some extent. Further, optionally, the injection port 102 is close to the geometric centroid of the cover 120, for example, at a distance of less than 5 mm to the geometric centroid of the cover. In another embodiment of this application, the injection port 102 may be created on the bottom wall 111 instead, thereby also accelerating the rate of infiltrating the electrode assembly 200. Correspondingly, the injection port 102 may be close to the geometric centroid of the bottom wall 111, for example, at a distance of less than 5 mm to the geometric centroid of the bottom wall.

It is hereby noted that in the example described above, the electrochemical device 1 includes one electrode assembly 200. However, this application is not limited to the example. For example, in some other embodiments of this application, the electrochemical device 1 may include at least two electrode assemblies 200. The electrode assemblies 200 are arranged along the second direction X. All the electrode assemblies 200 are connected to the same first conductive piece 300, and all the electrode assemblies 200 are connected to the same second conductive piece 400. The electrode assemblies 200 may be electrically connected to each other in series, parallel, or series-and-parallel pattern. It is hereby noted that, with a plurality of electrode assemblies 200 stacked together in the electrochemical device, a single electrode assembly 200 can avoid being overly thick, thereby facilitating the process of stacking each electrode assembly 200 and reducing the error rate during the stacking of the electrode assemblies 200.

In an electrochemical device in which the electrode assembly assumes a stacked structure in the current market, a stacking direction (that is, the second direction X) of the first electrode plate and the second electrode plate is consistent with a packaging direction (that is, the first direction Z) of the housing and the cover in the housing assembly. During charging of the electrochemical device, the electrode assembly swells noticeably along the stacking direction. In addition, the strength of the housing assembly in the packaging direction is relatively low. Therefore, the expansion and deformation of the electrode assembly are prone to cause deformation or even cracking of the housing assembly in the stacking direction, and in turn, cause electrolyte leakage and other phenomena, thereby impairing the mounting performance of the electrochemical device.

The electrochemical device 1 according to this embodiment of this application includes a housing assembly 100 and an electrode assembly 200. The electrode assembly 200 includes a first electrode plate 210, a second electrode plate 220, and a separator 230. The first electrode plate 210 includes a first electrode plate unit 211. The second electrode plate 220 includes a second electrode plate unit 221. The first electrode plate unit 211 and the second electrode plate unit 221 are stacked along a second direction X perpendicular to the first direction X. The separator 230 is disposed between the first electrode plate unit 211 and the second electrode plate unit 221 that are adjacent to each other. Therefore, during charging of the electrochemical device, the expansion of the electrode assembly 200 mainly occurs along the second direction X. The amount of expansion in the first direction Z is tiny, and therefore, the housing assembly 100 is not prone to deform or crack due to expansion of the electrode assembly 200.

To sum up, the electrochemical device 1 according to this embodiment of this application can improve the current situation that the housing assembly 100 in a conventional electrochemical device is prone to deformation and cracking. In addition, because the electrochemical device 1 swells to a low degree or to no degree in the first direction Z, no space needs to be reserved between the electrode assembly 200 and the housing assembly 100 along the above direction in the housing assembly 100 of the electrochemical device 1, thereby increasing the energy density of the electrochemical device. In other words, without substantially losing the energy density, the electrochemical device 1 according to this embodiment of this application can improve the current situation of a conventional electrochemical device prone to expand and deform in the first direction X.

Next, using an example in which the first active material layer 213 in the electrochemical device 1 contains a negative active material doped with silicon at a mass percent of 60% (hereinafter referred to as a high-silicon-based negative active material), the following additionally describes the energy density difference between the electrochemical device 1 according to this embodiment of this application and a conventional electrochemical device in the related art. In the following example, the housing assembly 100 of each electrochemical device is 82.5 mm in length, 72.5 mm in width, and 50 mm in thickness. The total gap between the housing assembly 100 and the first electrode plate unit 211 on both sides is counted as 2.5 mm.

First, an electrochemical device that contains a conventional graphite-based negative active material and in which all components of the electrode assembly are stacked along the first direction Z is defined as a first electrochemical device. The first electrochemical device almost fully fills the space of the housing in the direction Z. An electrochemical device that contains a high-silicon-based negative active material and in which all components of the electrode assembly are stacked along the first direction Z is defined as a second electrochemical device. Due to the expansion characteristics of a stacked-type cell containing a high-silicon negative electrode, in order to prevent the housing from deforming or rupturing due to expansion, a 10% thickness expansion space needs to be reserved along the first direction Z inside the housing assembly of the second electrochemical device. An electrochemical device that contains a high-silicon-based negative active material and in which all components of the electrode assembly are stacked along the second direction X is defined as a third electrochemical device.

With respect to the first electrochemical device and the second electrochemical device, because the high-silicon-based negative active material exhibits advantages such as a high gram capacity and a low potential, although an expansion space is reserved in the second electrochemical device, the energy density of the second electrochemical device is higher than that of the first electrochemical device. The ratio of the energy density between the two electrochemical devices is S₁, and S₁ is approximately equal to 1.3.

The electrode assemblies in the second electrochemical device are stacked along the first direction Z, in which just a 10% expansion space needs to be reserved in the first direction Z. Therefore, the significant dimensions of an electrode assembly in the second electrochemical device are: 80 mm in length, 70 mm in width, and 45 mm in thickness. The volume of the second electrochemical device is V_{b}.

The electrode assemblies in the third electrochemical device are stacked along the width direction of the electrochemical device, and the second direction X is the width direction of the electrochemical device. The significant dimensions of an electrode assembly in the third electrochemical device are: 80 mm in length, 47.5 mm in width, and 72.5 mm in thickness. The volume of the third electrochemical device is V_{c}. Therefore, the ratio of energy density between the third electrochemical device and the second electrochemical device is S₂ = V_{c}/V_{b} = 1.09325.

As can be seen from the above data, the energy density of the electrochemical device 1 according to this embodiment of this application is higher than that of a conventional electrochemical device currently available in the market by approximately (S₁ × S2 - 1) × 100% = 42.12%. In other words, the energy density of the electrochemical device according to this embodiment of this application is higher than that of a conventional electrochemical device by approximately 40%.

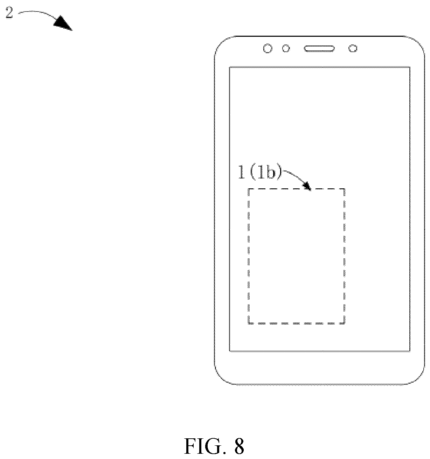

Based on the same inventive concept, this application further provides an electrical device. Referring to FIG. 8, which is a schematic diagram of an electrical device 2 according to an embodiment of this application, the electrical device 2 includes the electrochemical device (1, 1b) according to any one of the foregoing embodiments and a load structure powered by the electrochemical device. In this embodiment, the electrical device 2 includes a mobile phone. Understandably, in other embodiments of this application, the electrical device may be a tablet computer, a watch, a headset, a computer, an unmanned aerial vehicle, an electric vehicle, an electric bicycle, an electric tool, robot cleaner, or any other electrically powered device.

The electrical device 2 contains the electrochemical device 1 described in the above embodiment, and therefore, can improve the current situation that the electrochemical device in the electrical device 2 is prone to expansion and deformation in the first direction X.

Finally, it is hereby noted that the foregoing embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application.

## Claims

1. An electrochemical device, **characterized in that** the electrochemical device comprises:
a housing assembly, comprising a housing and a cover, wherein the housing comprises a bottom wall and a sidewall, one end of the sidewall is connected to the bottom wall, and another end of the sidewall extends away from the bottom wall; the bottom wall and the sidewall jointly define an accommodation cavity; the cover is fitted onto an end of the sidewall and covers the accommodation cavity, the end being away from the bottom wall; and a direction from the bottom wall to the cover is a first direction;
an electrode assembly, accommodated in the accommodation cavity and comprises a first electrode plate, a second electrode plate, and a separator; the first electrode plate comprises a first electrode plate unit, the second electrode plate comprises a second electrode plate unit, and the first electrode plate unit and the second electrode plate unit are stacked along a second direction and are both perpendicular to the second direction; and the separator is disposed between the first electrode plate unit and the second electrode plate unit that are adjacent to each other, wherein
the second direction is perpendicular to the first direction.

2. The electrochemical device according to claim 1, **characterized in that** the first electrode plate is a negative electrode plate; and
the first electrode plate comprises a first current collector and a first active material layer disposed on a surface of the first current collector, a material of the first active material layer comprises silicon, and a mass percent of silicon in a total mass of the first active material layer is greater than or equal to 10%.

3. The electrochemical device according to claim 2, **characterized in that** the mass percent of silicon in the total mass of the first active material layer is greater than or equal to 30% and less than or equal to 80%.

4. The electrochemical device according to claim 2, **characterized in that** the first active material layer comprises at least one of the following materials: silicon, silicon-based oxide, silicon carbide, silicon nanowires, and silicon nanoparticles.

5. The electrochemical device according to claim 1, **characterized in that** the electrochemical device further comprises a first conductive piece, the first electrode plate comprises a first current collector and a first active material layer, the first current collector comprises a first region and a second region, the first region is perpendicular to the second direction, the second region is electrically connected to the first region, the first active material layer is disposed on a surface of the first region, the first region and the first active material layer jointly constitute the first electrode plate unit, all the first electrode plate units are spaced out along the second direction, and the second region is electrically connected to the first conductive piece.

6. The electrochemical device according to claim 5, **characterized in that** the housing comprises a first sidewall unit and a second sidewall unit disposed opposite to each other along a third direction, both the second region and the first conductive piece are located between the first region and the first sidewall unit, and the third direction is perpendicular to both the first direction and the second direction; and
the second region comprises a first part and a second part, one end of the first part is connected to the first region, and another end of the first part extends toward the first sidewall unit; the second part is connected to an end of the first part, the end being away from the first region; the second part is bent against the first part; and the second part is connected to the first conductive piece.

7. The electrochemical device according to claim 6, **characterized in that** the electrode assembly comprises at least three first electrode plates, the second part is bent against the first part, and all the second parts are bent in a same bending direction;
among any two adjacent second parts along a first preset direction, a downstream second part at least partly overlaps an upstream second part, and no three adjacent second parts share a common overlap region, wherein
the first preset direction is a direction from one end to another end of the second part, wherein the one end is close to the first part and the other end is away from the first part.

8. The electrochemical device according to claim 1, **characterized in that** the electrochemical device further comprises a first insulating tape; and
the electrode assembly comprises a first surface and a second surface that are opposite to each other along the second direction, one end of the first insulating tape is fixed onto the first surface, and another end of the first insulating tape is fixed onto the second surface.

9. The electrochemical device according to claim 1, **characterized in that** the electrochemical device further comprises a second insulating tape; and
the second insulating tape is fixed onto the electrode assembly and the housing separately so that the electrode assembly is fixed onto the housing.

10. The electrochemical device according to claim 9, **characterized in that**
viewed along the first direction, an edge of the bottom wall does not go beyond an end of the sidewall, the end being close to the bottom wall; and
viewed along the first direction, an edge of the cover does not go beyond an end of the sidewall, the end being close to the cover.

11. The electrochemical device according to claim 1, **characterized in that** the electrochemical device comprises at least two electrode assemblies, and all the electrode assemblies are arranged along the second direction.

12. The electrochemical device according to claim 1, **characterized in that** the electrochemical device further comprises an electrode post mounted on the housing, the electrode post is insulated from the housing, and the electrode post is electrically connected to the second electrode plate unit.

13. The electrochemical device according to claim 1, **characterized in that** an injection port is provided on the cover, and a distance between the injection port and a geometric centroid of the cover is less than 5 mm; or
an injection port is provided on the bottom wall, and a distance between the injection port and a geometric centroid of the bottom wall is less than 5 mm.

14. The electrochemical device according to claim 1, **characterized in that** a length-to-width ratio of the first electrode plate and a length-to-width ratio of the second electrode plate are both 3 to 20.

15. The electrochemical device according to claim 1, **characterized in that** the sidewall is formed in one piece, and a tensile strength of a material of the sidewall is greater than or equal to 1000 MPa.

16. The electrochemical device according to claim 1, **characterized in that** the sidewall is formed by welding, and a welding strength at a weld is greater than or equal to 1000 MPa.

17. An electrical device, **characterized in that** the electrical device comprises the electrochemical device according to any one of claims 1 to 16.
